**Europäisches Patentamt**

**European Patent Office**

**Office européen des brevets**

(11) Veröffentlichungsnummer: **0 065 241**
**B1**

(12) **EUROPÄISCHE PATENTSCHRIFT**

(45) Veröffentlichungstag der Patentschrift:
**02.05.85**

(21) Anmeldenummer: **82103972.4**

(22) Anmeldetag: **07.05.82**

(51) Int. Cl.⁴: **B 60 G 11/00**

(54) **Fahrzeugfederung, insbesondere für Schienen- und Lastkraftfahrzeuge.**

(30) Priorität: **15.05.81 DE 3119469**

(43) Veröffentlichungstag der Anmeldung:
**24.11.82 Patentblatt 82/47**

(45) Bekanntmachung des Hinweises auf die Patenterteilung:
**02.05.85 Patentblatt 85/18**

(84) Benannte Vertragsstaaten:
**AT BE CH DE FR GB IT LI SE**

(56) Entgegenhaltungen:
**DE - A - 2 644 964**
**DE - A - 2 657 836**
**DE - C - 2 060 960**
**US - A - 3 904 181**

(73) Patentinhaber: **DUEWAG Aktiengesellschaft, Duisburger Strasse 145, D-4150 Krefeld 11 (DE)**

(72) Erfinder: **Schraut, Rolf, Dr.-Ing., Bonhoefferstrasse 25, D-4050 Mönchengladbach 1 (DE)**
Erfinder: **Braun, Otto, Inrather Strasse 298, D-4150 Krefeld 1 (DE)**

ACTORUM AG

**Beschreibung**

Die Erfindung betrifft eine Fahrzeugfederung, insbesondere für Schienen- und Lastkraftfahrzeuge, im wesentlichen gebildet aus einer zwischen relativ zueinander beweglichen Fahrzeugteilen — beispielsweise Fahrzeugaufbau und Drehgestell/Radsatz — angeordneten Hauptfeder — beispielsweise Schraubenfeder, Luftfeder oder dergleichen — und einer bei Ausfall der Hauptfeder beaufschlagten Notfeder.

Bei einer Federung der gattungsgemässen Art ist bei Schienenfahrzeugen bekannt, den Fahrzeugaufbau über einen Luftfederbalg und eine damit verbundene Gummifeder gegen den Drehgestellrahmen abzustützen. Das fahrzeugaufbauseitige Ende der Gummifeder ist mit einem Notlaufgleitstück belegt, das von dem im Normalfall mit Abstand dazu befindlichen, im Defektfall der Luftfeder sich absenkenden Fahrzeugaufbau belastet wird (DE-C-2 060 960).

Ferner sind bei Lastkraftfahrzeugen Federungen mit den eingangs genannten Merkmalen verbreitet, z.B. in der Kombination einer Schrauben- oder Blattfeder als Hauptfeder mit einem kegelförmigen Gummiblock als Notfeder (DE-A-2 644 964).

Der Erfindung liegt die Aufgabe zugrunde, bei einer Fahrzeugfederung der gattungsgemässen Art die Notfeder insbesondere für beengte Einbauverhältnisse in ihren Abmessungen möglichst kompakt und dabei in ihren Federeigenschaften derart auszubilden, dass bei Ausfall der Hauptfeder die dabei auftretenden Vertikalkräfte unter Dämpfung aufgenommen werden und im weiteren ein Notlaufbetrieb möglich ist; überdies soll die Notfeder im Sinne einer Stabilisierung der relativ zueinander beweglichen Fahrzeugteile wirksam sein.

Diese Aufgabe wird erfindungsgemäss dadurch gelöst, dass als Notfeder eine parallel zur Wirkungslinie der Hauptfeder an beiden Fahrzeugteilen angelenkte, eine unter Vorspannung stehende Reibungsfeder hoher Arbeitsaufnahmefähigkeit und Dämpfung aufnehmende Federeinheit mit einem mindestens der Einfederung der Hauptfeder entsprechenden, freien Hubweg vorgesehen ist.

Im Sinne einer kompakten und zugleich gekapselten Ausführung der Federeinheit sowie zur weiteren Stabilisierung der beiden durch die Notfeder aneinander angelenkten Fahrzeugteile ist nach einer Ausgestaltung der Erfindung vorgesehen, dass die Federeinheit ein Gehäuse mit einer darin geführten büchsenartigen Aufnahme für die von einem Boden des Gehäuses beaufschlagte Reibungsfeder aufweist, wobei einerseits das Gehäuse mit dem im Notfall abzufedernden einen Fahrzeugteil und andererseits ein an der Aufnahme befestigter, aus dem Gehäuse ragender Abstützarm mit dem anderen Fahrzeugteil verbunden sind.

Für die Ausrüstung von Fahrzeugen, deren beide Fahrzeugteile relativ zueinander Querspiel aufweisen sollen, sieht eine Weiterbildung gemäss der Erfindung vor, dass die Verbindung des Gehäuses mit dem einen Fahrzeugteil und die Verbindung des Abstützarmes mit dem anderen Fahrzeugteil jeweils durch ein Gelenk ausgeführt sind.

Um die Reibungsfeder gegen übergrosse Belastungen zu schützen, ist es nach einer nächsten Ausführungsform der Erfindung gegeben, dass die büchsenartige Aufnahme durch eine an ihr getroffene Längserstreckung, die dem freien Hubweg zuzüglich dem maximalen Arbeitshub der Reibungsfeder der Federeinheit entspricht, einen Anschlag für den Boden des Gehäuses bildet.

Für ein Anheben des oberen Fahrzeugteiles zugleich mit dem unteren Fahrzeugteil sieht ein weiteres Merkmal der Erfindung vor, dass das dem Boden abgewandte Ende des Gehäuses mit einer daran lösbar befestigten, den Abstützarm umgreifenden Abschlussplatte versehen ist.

Ein weiterer Schutz der Reibungsfeder gegen Schmutz und Feuchtigkeit wird in Weitergestaltung der Erfindung dadurch erzielt, dass die Abschlussplatte eine an dem Abstützarm anliegende Dichtung aufnimmt.

Um bei Rückfederung der Hauptfeder einen Stoss zwischen der Abschlussplatte und der büchsenartigen Aufnahme zu vermeiden, liegt es schliesslich im Wesen der Erfindung, dass zwischen der Innenfläche der Abschlussplatte und der abstützarmseitigen Fläche der büchsenartigen Aufnahme ein Freiraum gebildet ist. Dieser Freiraum ist insbesondere unter Berücksichtigung der bei Bewegung der Fahrzeugteile in Querrichtung grösser werdenden Länge der Federeinheit so ausgelegt, dass die Innenfläche der Abschlussplatte und die abstützarmseitige Fläche der büchsenartigen Aufnahme bei Erreichen eines gewollten Endwertes der Querbewegung im Sinne eines Anschlages zusammenwirken.

Die mit der Erfindung erzielbaren Vorteile bestehen insbesondere darin, dass durch die über die Federeinheit als Notfeder erreichte ständige Wirkverbindung der beiden relativ zueinander beweglichen Fahrzeugteile eine Stabilisierung dieser Teile vorliegt. Die Federeinheit zeichnet sich ausserdem dadurch aus, dass bei Ausfall der Hauptfeder die dabei auftretenden Vertikalkräfte unter einer Dämpfung, welche negative Auswirkungen dieser Kräfte insbesondere auf die beiden Fahrzeugteile und die Fahrgäste verhindert, aufgenommen werden und im weiteren ein Notlaufbetrieb gewährleistet ist. Weiter ist die Federeinheit ein kompaktes, für sich im ganzen einbaufertig erstellbares Bauelement. Durch ihre von der Hauptfeder separierte Anordnung ist ein An- und Abbau besonders wirtschaftlich durchführbar.

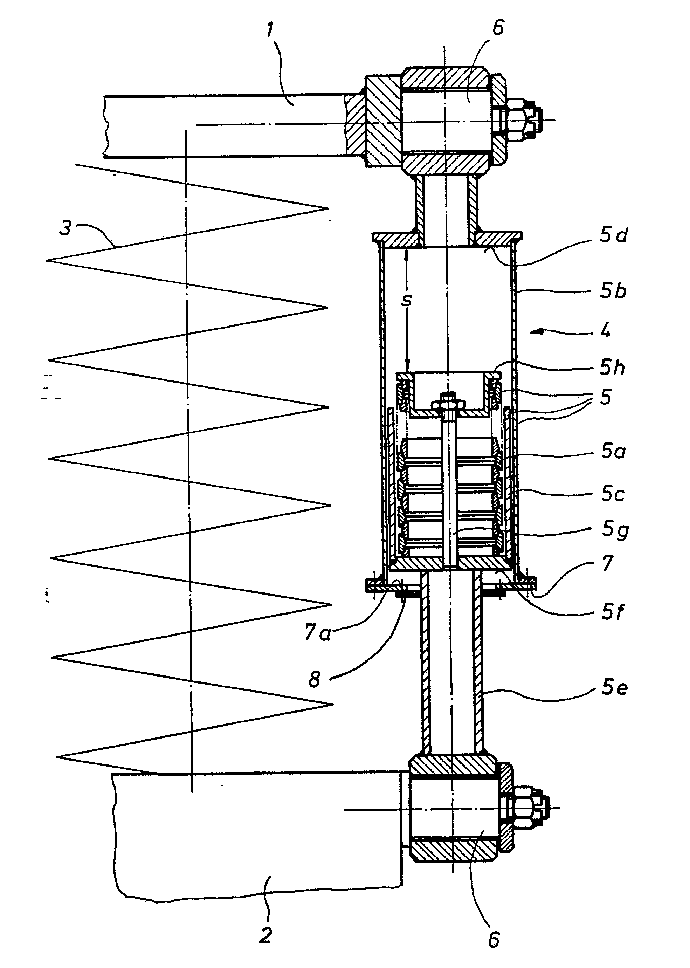

Ein Ausführungsbeispiel der Erfindung ist in der Zeichnung dargestellt und wird im folgenden näher beschrieben. Die Zeichnung zeigt eine Fahrzeugfederung, im Längsschnitt.

Zwischen relativ zueinander beweglichen Fahrzeugteilen 1 und 2, im vorliegen Beispiel zwischen einem mit einem Fahrzeugaufbau (1) verbundenen Träger und einem Drehgestellrahmen (2), befindet sich eine symbolisch gezeichnete Hauptfeder 3. Parallel zur Wirkungslinie der Hauptfeder 3 ist an den Fahrzeugteilen 1 und 2 eine Federeinheit 5 angelenkt, deren Eigenschaft als Notfeder 4 über einen an ihr vorgesehenen freien Hubweg s erzielt wird, welcher mindestens der Einfederung der Hauptfeder 3 entspricht. ·

Die Federeinheit 5 besteht im wesentlichen aus einer Innen- und Aussenringe aufweisenden Reibungsfeder 5a mit hoher Arbeitsaufnahmefähigkeit und Dämpfung, einem Gehäuse 5b und einer darin geführten büchsenartigen Aufnahme 5c für die Reibungsfeder 5a. Das Gehäuse 5b und ein an der Aufnahme 5c befestigter Abstützarm 5e sind mit dem einen Fahrzeugteil 1 bzw. dem anderen Fahrzeugteil 2 jeweils über ein Gelenk 6 verbunden. wobei diese Gelenke 6 auch räumlich beweglich ausgebildet sein können. Eine an der büchsenartigen Aufnahme 5c gehaltene Zugschraube 5g und ein hutförmiger Topf 5h dienen zum Vorspannen der Reibungsfeder 5a; die Vorspannung entspricht weitgehend dem Gewicht des Fahrzeugteiles 1 (Fahrzeugaufbau) oder dem sich bei meistens mehrfacher Anordnung der Kombination Hauptfeder 3 — Federeinheit 5 ergebenden Anteil dieses Gewichtes.

Bei Ausfall der Hauptfeder 3 wird die Reibungsfeder 5a unter Aufheben des freien Hubweges s von dem Boden 5d des Gehäuses 5b beaufschlagt, wobei die auftretenden Kräfte federnd und unter Dämpfung aufgenommen werden. Im übrigen bildet die büchsenartige Aufnahme 5c einen die Reibungsfeder 5a gegen übergrosse Belastung schützenden Anschlag für den Boden 5d des Gehäuses 5b.

Wie aus der Zeichnung weiter ersichtlich, ist das dem Boden 5d abgewandte Ende des Gehäuses 5b mit einer daran lösbar befestigten Abschlussplatte 7 versehen, die den Abstützarm 5e umgreift. Dadurch ist es auf einfache Weise möglich, das Fahrzeugteil 2 (Drehgestell) zugleich mit dem Fahrzeugteil 1 (Fahrzeugaufbau) anzuheben. Der gezeigte Freiraum zwischen der Innenfläche 7a der Abschlussplatte 7 und der abstützarmseitigen Fläche 5f der büchsenartigen Aufnahme 5c ist unter Berücksichtigung der bei Bewegungen der Fahrzeugteile 1 und 2 in Querrichtung grösser werdenden Länge der Federeinheit 5 so ausgelegt, dass die vorgenannten Flächen 7a und 5f bei Erreichen eines gewollten Endwertes der Querbewegung im Sinne eines Anschlages zusammenwirken.

Um die an sich durch die labyrinthartige Führung zwischen dem Gehäuse 5b und der büchsenartigen Aufnahme 5c schon gegebene Abschirmung der Reibungsfeder 5a gegen Schmutz und Feuchtigkeit noch zu verbessern, trägt die Abschlussplatte 7 eine an dem Abstützarm 5e anliegende Dichtung 8.

## Patentansprüche

1. Fahrzeugfederung, insbesondere für Schienen- und Lastkraftfahrzeuge, im wesentlichen gebildet aus einer zwischen relativ zueinander beweglichen Fahrzeugteilen (1, 2) — beispielsweise Fahrzeugaufbau und Drehgestell/Radsatz — angeordneten Hauptfeder (3) — beispielsweise Schraubenfeder, Luftfeder oder dergleichen — und einer bei Ausfall der Hauptfeder (3) beaufschlagten Notfeder (4), dadurch gekennzeichnet, dass als Notfeder (4) eine parallel zur Wirkungslinie der Hauptfeder (3) an beiden Fahrzeugteilen (1, 2) angelenkte, eine unter Vorspannung stehende Reibungsfeder (5a) hoher Arbeitsaufnahmefähigkeit und Dämpfung aufnehmende Federeinheit (5) mit einem mindestens der Einfederung der Hauptfeder (3) entsprechenden, freien Hubweg (s) vorgesehen ist.

2. Fahrzeugfederung nach Anspruch 1, dadurch gekennzeichnet, dass die Federeinheit (5) ein Gehäuse (5b) mit einer darin geführten büchsenartigen Aufnahme (5c) für die von einem Boden (5d) des Gehäuses (5b) beaufschlagte Reibungsfeder (5a) aufweist, wobei einerseits das Gehäuse (5b) mit dem im Notfall abzufedernden einen Fahrzeugteil (1) und andererseits ein an der Aufnahme (5c) befestigter, aus dem Gehäuse (5b) ragender Abstützarm (5e) mit dem anderen Fahrzeugteil (2) verbunden sind.

3. Fahrzeugfederung nach Anspruch 2, dadurch gekennzeichnet, dass die Verbindung des Gehäuses (5b) mit dem einen Fahrzeugteil (1) und die Verbindung des Abstützarmes (5e) mit dem anderen Fahrzeugteil (2) jeweils durch ein Gelenk (6) ausgeführt sind.

4. Fahrzeugfederung nach Anspruch 2 oder 3, dadurch gekennzeichnet, dass die büchsenartige Aufnahme (5c) durch eine an ihr getroffene Längserstreckung, die dem freien Hubweg (s) zuzüglich dem maximalen Arbeitshub der Reibungsfeder (5a) der Federeinheit (5) entspricht, einen Anschlag für den Boden (5d) des Gehäuses (5b) bildet.

5. Fahrzeugfederung nach einem der Ansprüche 2 bis 4, dadurch gekennzeichnet, dass das dem Boden (5d) abgewandte Ende des Gehäuses (5b) mit einer daran lösbar befestigten, den Abstützarm (5e) umgreifenden Abschlussplatte (7) versehen ist.

6. Fahrzeugfederung nach Anspruch 5, dadurch gekennzeichnet, dass die Abschlussplatte (7) eine an dem Abstützarm (5e) anliegende Dichtung (8) aufnimmt.

7. Fahrzeugfederung nach Anspruch 5 oder 6, dadurch gekennzeichnet, dass zwischen der Innenfläche (7a) der Abschlussplatte (7) und der abstützarmseitigen Fläche (5f) der büchsenartigen Aufnahme (5c) ein Freiraum gebildet ist.

## Claims

1. A vehicle-spring suspension, in particular for rail cars and motor trucks, essentially formed by a main spring (3) — for example a helical spring, a pneumatic spring or the like — which is disposed between parts (1, 2) of the vehicle — for example the vehicle structure and bogie/wheel-set — which are movable relative to one another and by an emergency spring (4) which is acted upon in the event of failure of the main spring (3), characterized in that there is provided as the emergency spring (4) a spring unit (5) which is articulated parallel to the line of operation of the main spring (3) on both parts (1, 2) of the vehicle, comprises a prestressed friction spring (5a) of high operational load capacity and damping and has a free stroke path (s) corresponding at least to the stroke of the main spring (3).

2. A vehicle-spring suspension according to Claim 1, characterized in that the spring unit (5) comprises a casing (5b) having guided therein a sleeve-like receiving portion (5c) for the friction spring (5a), the friction spring being acted upon by a base (5d) of the casing (5b), the casing (5b) being connected to one part (1) of the vehicle which is to be cushioned in the case of need, and a support arm (5e), which is secured to the receiving portion (5c) and which projects out of the casing (5b), being connected to the other part (2) of the vehicle.

3. A vehicle-spring suspension according to Claim 2, characterized in that the casing (5b) is connected to the said one part (1) of the vehicle and the support arm (5e) is connected to the other part (2) of the vehicle by respective articulated joints (6).

4. A vehicle-spring suspension according to Claim 2 or 3, characterized in that the sleeve-like receiving portion (5c) forms a stop for the base (5d) of the casing (5b) by a longitudinal extent therefrom which corresponds to the free stroke path (s) plus the maximum operating stroke of the frictional spring (5a) of the spring unit (5).

5. A vehicle-spring suspension according to any one of Claims 2 to 4, characterized in that the end of the casing (5b) remote from the base (5d) is provided with an end plate (7) detachably secured thereto and surrounding the support arm (5e).

6. A vehicle-spring suspension according to Claim 5, characterized in that the end plate (7) receives a seal (8) which lies close to the support arm (5e).

7. A vehicle-spring suspension according to Claim 5 or 6, characterized in that a free space is formed between the inner surface (7a) of the end plate (7) and the face (5f) of the sleeve-like receiving portion (5c) facing the support arm (5e).

**Revendications**

1. Suspension pour véhicules, en particulier pour véhicules ferroviaires et camions, essentiellemment formée d'un ressort principal (3) — par exemple d'un ressort à boudin, d'un ressort à air ou similaire — disposé entre des parties (1, 2) du véhicule qui sont mobiles relativement — par exemple la caisse du véhicule et le bogie/train de roues — et d'un ressort de secours (4) subissant l'action en cas de défaillance du ressort principal (3), caractérisée en ce que comme ressort de secours (4) est prévu un ensemble de ressort (5) articulé aux deux parties (1,2) du véhicule parallèlement à la ligne d'action du ressort principal (3), d'absorption d'énergie et à grand amortissement, soumis à une précharge et présentant une course de levage libre (s) correspondant au moins à la course de compression du ressort principal (3).

2. Suspension pour véhicule selon la revendication 1, caractérisée en ce que l'ensemble de ressort (5) présente un carter (5b) dans lequel est guidé un logement en forme de manchon (5c) adjoint au ressort à friction (5a) soumis à l'action d'un fond (5d) du carter (5b), et en ce que, d'une part, le carter (5b) est relié à l'une (1) des parties du véhicule, à suspendre en cas de détresse, et, d'autre part, un bras de soutien (5e) fixé au logement (5c) et dépassant du carter (5b) est relié à l'autre partie (2) du véhicule.

3. Suspension pour véhicule selon la revendication 2, caractérisée en ce que la liaison du carter (5b) avec l'une (1) des parties de véhicule et la liaison du bras de soutien (5e) avec l'autre partie de véhicule (2) sont constituées chacune par une articulation (6).

4. Suspension pour véhicule selon l'une des revendications 2 et 3, caractérisée en ce que le logement en forme de manchon (5c), par une extension longitudinale qui correspond à la course de levage libre (s) plus la course maximale de travail du ressort à friction (5a) de l'ensemble de ressort (5), forme un butée pour le fond (5d) du carter (5b).

5. Suspension pour véhicule selon l'une des revendications 2 à 4, caractérisée en ce que l'extrémité du carter (5b) qui est opposée au fond (5d) est munie d'une plaque fermeture (7) qui lui est fixée de façon détachable et qui entoure le bras de soutien (5e).

6. Suspension pour véhicule selon la revendication 5, caractérisée en ce que la plaque de fermeture (7) reçoit un joint (8) s'appliquant contre le bras de soutien (5e).

7. Suspension pour véhicule selon l'une des revendications 5 et 6, caractérisée en ce qu'entre la surface intérieure (7a) de la plaque de fermeture (7) et la surface (5f) du logement en forme de manchon (5c) qui se trouve du côté du bras de soutien (5e) est formé un espacement libre.